# EUROPEAN PATENT SPECIFICATION

(11) **EP 0 657 638 B1**
(45) Date of publication and mention of the grant of the patent: **15.07.1998**
(21) Application number: 94308640.5
(22) Date of filing: 23.11.1994
(51) Int. Cl.: F02D 41/40, F02D 1/16, F02M 41/00

(54) **An injection timing apparatus for an electronic fuel injection system**
Einspritzzeitpunktverstellungsvorrichtung für ein elektronisches Kraftstoffeinspritzsystem
Dispositif de synchronisation d'injection pour un système électronique d'injection de carburant

(30) Priority: 09.12.1993 JP 340771/93
(43) Date of publication of application: 14.06.1995
(73) Proprietor: ZEXEL CORPORATION, Tokyo (JP)
(72) Inventor: Akira Sekiguchi, c/o Zexel Corporation, Higashimatsuyama, Saitama (JP); Yoshinori, Uchida, c/o Zexel Corporation, Higashimatsuyama, Saitama (JP)
(74) Representative: Matthews, Howard Nicholas

(56) References cited:
- EP-A- 0 310 289
- EP-A- 0 425 798
- FR-A- 2 670 533
- GB-A- 2 176 028
- US-A- 4 476 832
- PATENT ABSTRACTS OF JAPAN vol. 008, no. 224 (M-331), 13 October 1984 & JP-A-59 105942 (TOYOTA JIDOSHA KK), 19 June 1984,

## Description

The present invention relates to an injection timing apparatus for an electronic fuel injection system that controls the injection start time for a fuel injection pump.

An example of a fuel injection pump for which the timing apparatus that determines the fuel injection timing is controled with a timing control valve, is disclosed in Japanese Unexamined Patent Publication S59-105942. This apparatus is provided with processing through which a decision is made as to whether or not the engine is in the idling state and when the engine is determined to be in the idling state, the duty ratio is set to 0% (100% with a valve that becomes open when a control pulse is at HI) so that the timing control valve will be fully opened to set the fuel injection timing at the most delayed angle.

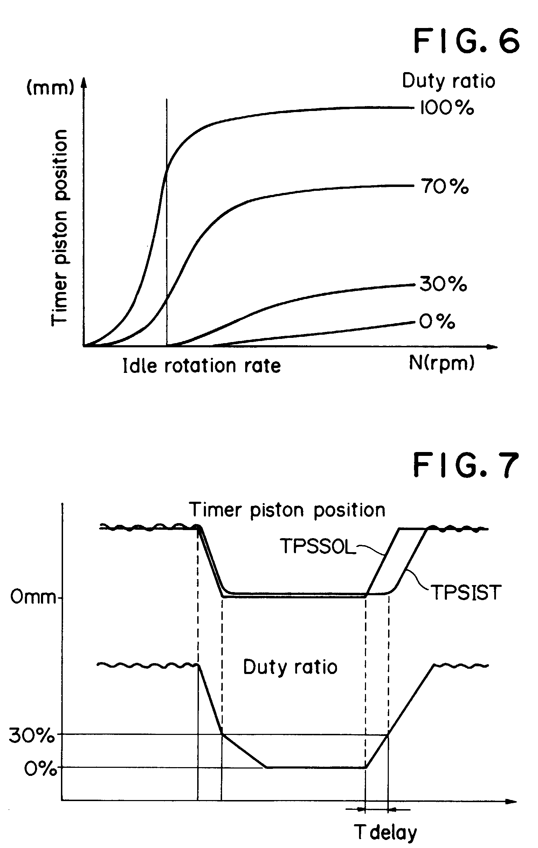

In this manner, the timing piston is fixed at the position where the fuel injection timing is at the most delayed angle (0mm) during idling. However, as is clear from the characteristics diagram shown in Figure 6, if the rotation rate of the engine is low, as it is in this case, even when the timing piston position is at 0mm, the drive duty ratio of the timing control valve may be larger than 0%. In the figure, the timing piston position is at 0mm, while the duty ratio is approximately 30% or lower.

However, even when the timing piston is at the Omm position, the control unit may recognize the timing piston position as being larger than Omm due to, for example, inconsistency in the mounting position of a sensor which recognizes the timing piston position (a timing piston sensor, for instance) or vibration of the sensor. In such a situation, the trailing delay in the injection timing presents a problem.

In other words, when the target timing piston position is at 0mm and the engine rotation rate becomes gradually reduced toward the idling state, the actual timing piston position is at Omm with the duty ratio at approximately 30%. In this situation, if the control unit recognizes the actual timing piston position as larger than Omm, the duty ratio becomes further reduced toward 0% as shown in Figure 7, in a control such as PID control, in which the timing piston position converges toward the target position. Because of this, if the engine rotation rate is suddenly increased from the idling state, a dead zone occurs, in which the timing piston position does not change until the duty ratio reaches 30%, and a delay (T delay) in advancing the injection timing results.

Therefore, the object of the present invention is to provide an injection timing apparatus for an electronic fuel injection system with which the problem described above is solved and the trailing delay in the injection timing is reduced by controlling the duty ratio in the dead zone.

According to the present invention there is provided an injection timing apparatus of an electronic fuel injection system comprising;
a timing apparatus that adjusts the fuel injection start time by controlling the position of a timing piston with a timing control valve, said timing control valve being controlled with a duty ratio
a sensor that recognizes said position of said timing piston,
a means for target position calculation that calculates a target position for the timing piston based upon the operating state,
a means for duty ratio calculation that calculates the duty ratio of a drive pulse in such a manner that the actual position of said timing piston converges toward said target position,
   and
a drive means that outputs said drive pulse of said duty ratio that is calculated by said means for duty ratio calculation to said timing control valve,
characterized by
a means for decision making that determines whether or not said target position of said timing piston has been set within a specific range and also determines whether or not said position of said timing piston detected by said sensor has reached said specific range, and by
a means for duty ratio adjustment that, when a decision is made by said means for decision making that a target position of said timing piston has entered said specific range, fixes said duty ratio of said drive pulse at the value at the time point at which said position of said timing piston detected by said sensor has reached said specific range, and that, when a decision is made by said means for decision making that, after shifting from that state, said target position of said timing piston has gone out of said specific range, calculates said duty ratio by using said fixed duty ratio as the initial value for said means for duty ratio calculation.

Further according to the present invention there is provided an injection timing apparatus of an electronic fuel injection system comprising;
a timing apparatus that adjusts the fuel injection start time by controlling the position of a timing piston with a timing control valve, said timing control valve being controlled with a duty ratio
a sensor that recognizes said position of said timing piston,
a means for target position calculation that calculates a target position for said timing piston based upon the operating state,
a means for duty ratio calculation that calculates the duty ratio of the drive pulse in such a manner that the actual position of said timing piston converges toward said target position, and
a drive means that outputs the drive pulse of said duty ratio that is calculated by said means for duty ratio calculation to said timing control valve,
characterized by
a means for decision making that determines whether or not the engine is in the idling state, whether or not said target position for said timing piston has been set within a specific range and whether or not said position of said timing piston detected by said sensor has reached said specific range, and by
a means for duty ratio adjustment that, when a decision is made by said means for decision making that said engine is in said idling state, and that said target position of said timing piston has entered said specific range and said position of said timing piston detected by said sensor has reached said specific range, stores in memory said duty ratio of said drive pulse at that point in time and fixes said duty ratio at the value at which said timing control valve is fully open, and that, when a decision is made by said means for decision making that after shifting from that state, said target position of said timing piston has gone out of said specific range, calculates said duty ratio by using said stored duty ratio as the initial value for said means for duty ratio calculation.

As a result when the engine is in the idling state, for example, the drive duty ratio of the timing control valve moves toward the most delayed angle (0%) and the timing piston reaches a specific position on the most delayed angle side before the duty ratio reaches 0%, the duty ratio is fixed at the value at the point in time when the timing piston position has reached the most delayed angle position according to the present invention disclosed in claim 1. Consequently, even when the engine rotation rate goes up suddenly, the duty ratio does not rise from 0%, resulting in elimination of the dead zone and the trailing delay in injection timing.

Also, according to the invention disclosed in claim 2, when the timing piston position has reached the most delayed angle position, the duty ratio at that time point is stored in memory and, at the same time, the duty ratio is forcibly set to 0% and when the engine rotation rate goes up suddenly, the duty ratio for slave control is calculated again, based upon the duty ratio stored in memory. Thus, the dead zone is eliminated and, at the same time, the timing control valve can be set in the full open state during idling, resulting in elimination of the operating noise of the TCV during idling.
Figure 1 shows the schematic structure of an example of an electronic fuel injection system according to the present invention;
Figure 2 is a flow chart showing an example of control of fuel injection timing performed by the electronic fuel injection system in Figure 1;
Figure 3 is a characteristics diagram that indicates the relationship between the timing piston position and the duty ratio in the control processing shown in Figure 2;
Figure 4 is a flow chart showing another example of control of fuel injection timing;
Figure 5 is a characteristics diagram that indicates the relationship between the timing piston position and the duty ratio in the control processing shown in Figure 4;
Figure 6 is a characteristics diagram that indicates the relationship between the engine rotation rate N and the timing piston position;
Figure 7 is a characteristics diagram that indicates the relationship between the timing piston position and the duty ratio in control processing in the prior art;

The following is an explanation of embodiments of the present invention in reference to the drawings.

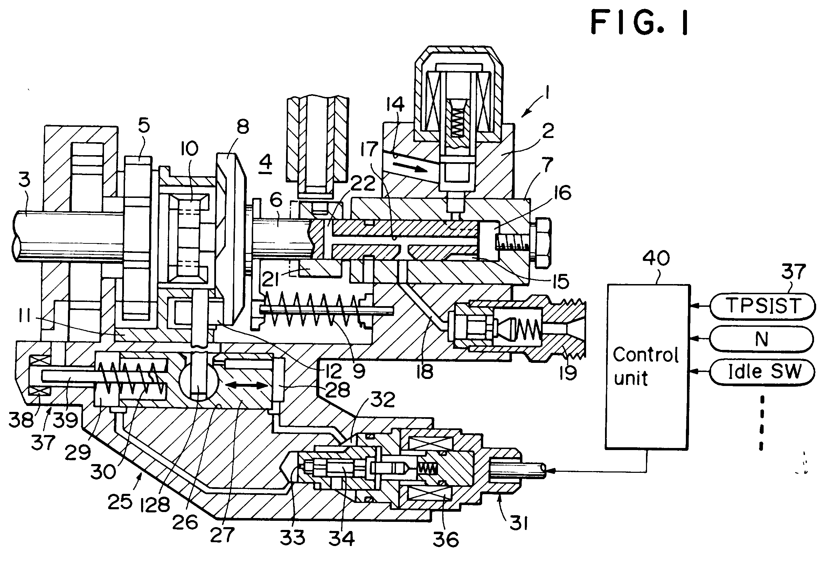

In Figure 1, a distributor-type fuel injection pump 1 is provided with a drive shaft 3 inserted in a housing 2. One end of the drive shaft 3 projects outside of the housing 2 to receive the drive torque from the engine (not shown), the other end of the drive shaft 3 extends into the chamber 4 inside the housing 2 and the feed pump 5 is linked to the drive shaft 3. Fuel from the fuel tank (not shown) is supplied to the chamber 4 through the feed pump 5.

The plunger 6 is mounted in the plunger barrel 7 in such a manner that it can slide freely. The base portion of the plunger 6 is pressed down and held in contact with the cam disk 8 by the plunger spring 9. The cam disk 8 is connected to the drive shaft 3 via the coupling 10 in such a manner that it can move in the direction of the shaft axis and, at the same time, it is in contact with a roller 12 that is supported by a roller holder 11. With the rotation of the cam disk 8, a reciprocal motion for intake and force-feed of fuel and a rotating motion for distributing the fuel are simultaneously imparted to the plunger 6.

During the intake process, in which the plunger 6 moves to the left in the figure, the fuel that is supplied to the chamber 4 from the oil transfer pump is delivered to the pump chamber 16, which is enclosed by the plunger barrel 7 and the plunger 6, via one of the intake grooves 15 that are formed extending from the intake port 14 in the direction of the front of the shaft of the plunger 6. During the force-feed process, when the plunger 6 travels to the right in the figure, the intake port 14 and the intake grooves 15 are separated and the fuel that has been compressed in the pump chamber 16 travels through the longitudinal hole 17 to enter one of the distributing passages 18 via the distributor port and then is sent to the injection nozzle (not shown) from the delivery valve 19 to be injected into the cylinder of the engine from the injection nozzle.

Also, a control sleeve 21 is externally fitted on the portion of the plunger 6 that protrudes out from the plunger barrel 7 in such a manner that it can slide freely. When the cut-off port 22 that communicates with the longitudinal hole 17 of the plunger 6 moves away from the side edge of the control sleeve 21 and opens into the chamber 4, the compressed fuel flows out into the chamber 4 and the delivery of fuel to the injection nozzle stops, thus ending injection. Because of this, the injection end, and, therefore, the injection quantity, can be adjusted through positional adjustment of the control sleeve 21. As the control sleeve 21 is moved to the left in the figure, the injection quantity is reduced and as it is moved to the right, the injection quantity is increased.

The timing apparatus 25 is provided with a timing piston 27 that is housed in the cylinder 26 that is provided below the roller holder 11 described above, in such a manner that it can slide freely. The timing piston 27 is linked to the roller holder 11 via the lever 128 to rotate the roller holder 11 with the movement of the timing piston 27 and, consequently, to adjust the injection timing.

At one end of the timing piston 27, a high pressure chamber 28 is formed, into which high pressure fuel from the chamber 4 is induced and at the other end, a low pressure chamber 29 is formed, which communicates with the intake path of the feed pump. Also, in the low pressure chamber 29, the timing spring 30 is mounted so that it can apply a constant force to the timing piston 27 toward the high pressure chamber. As a result, the timing piston 27 stops at a position where the pressure of the timing spring 30 and the hydraulic pressure in the high pressure chamber are in balance. When the pressure in the high pressure chamber increases, the timing piston 27 moves toward the low pressure chamber in resistance to the timing spring 30 and the roller holder 11 rotates in the direction in which the injection timing is advanced, to hasten the injection timing. Also, if the pressure in the high pressure chamber decreases, the timing piston 27 moves toward the high pressure chamber and the roller holder 11 is rotated in the direction in which the injection timing is delayed, to delay the injection timing.

Here, the pressure in the high pressure chamber 28 of the timer is adjusted with the timing control valve (TCV) 31 so that the required timer advance angle can be achieved. This timing control valve 31 is provided with a fuel intake 32 that communicates with the high pressure chamber 28 at the side surface portion and also is provided with a fuel outlet 33 that communicates with the low pressure chamber 29 at the front end portion. Inside the timing control valve 31, a needle 34 is housed, which opens and closes the communication between the fuel intake 32 and the fuel outlet 33. A constant force is applied to the needle 34 by a spring in the direction in which the communication between the fuel intake 32 and the fuel outlet 33 is cut off. When electricity is supplied to the solenoid 36, the needle 34 is attracted to the solenoid 36 in resistance to the spring so that the fuel intake 32 and the fuel outlet 33 are in communication.

Consequently, when there is no electric current to the solenoid 36, the high pressure chamber 28 and the low pressure chamber 29 are completely disconnected from each other. When an electric current is running, the high pressure chamber 28 and the low pressure chamber 29 are connected, to reduce the pressure in the high pressure chamber 28. As the pressure in the high pressure chamber 28 is reduced, the timing piston 27 moves to the position where it is in balance with the spring force of the timing spring 30, to change the injection timing.

In actuality, the pressure in the high pressure chamber 28 is adjusted through duty ratio control of the timing control valve. This duty ratio control is performed by the control unit 40. As the duty ratio approaches 0%, the timing control valve 31 approaches the full open state and the injection timing state is more delayed. As the duty ratio approaches 100%, the timing control valve 31 approaches the full closed state and the injection timing state is more advanced.

Also provided in the housing 2 is the timer position sensor 37, which detects the position for the timing piston 27. The timer position sensor 37 is provided, for example, on the low pressure chamber side, and is constituted of the detection coil 38, provided in the housing 2, and the rod 39, mounted on the timing piston 27. The signal output from the timer position sensor 37 is sent to the control unit 40 to be processed.

The control unit 40 is structured with a drive circuit that drives the timing control valve 31 and the like, a microcomputer that controls the drive circuit, an input circuit for inputting signals to the microcomputer and the like. The microcomputer is provided with a central processing unit (CPU), ROM, RAM, an A/D converter and the like. The rotation speed (N) of the engine, the ON/OFF signal from the idle switch and the like, as well as signals (TPSIST) from the timer position sensor (TPS) are input to the input circuit of the control unit 40. These signals are processed and then used to drive and control the timing control valve (TCV) 31 and the like, of the fuel injection pump in conformance to a specific program.

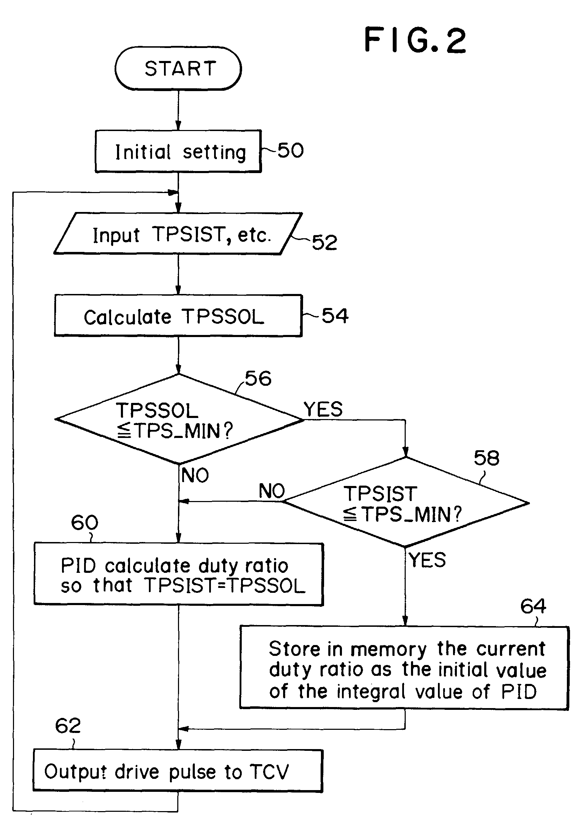

In Figure 2, an example of control of the timing apparatus performed by the control unit 40 is shown in a flow chart and the following is its explanation. In step 50, the control unit 40 performs initial setting of initial values for PID control through which the timing piston converges on the target position. Then in step 52, the signal from the TPS (TPSIST) and the signals from the operating state detectors, which detect various operating states, are input. In step 54 that follows, the target timing piston position (TPSSOL) that corresponds with the operating state is calculated.

In step 56, a decision is made as to whether or not the target position for the timing piston 27 (TPSSOL) is equal to or less than a specific position on the most delayed angle side (TPS_MIN: e.g., 0mm) and if it is equal to or less than TPS_MIN, the operation proceeds to step 58, in which a decision is made as to whether or not the actual position for the timing piston (TPSIST) detected by the TPS is equal to or less than TPS_MIN.

If the target position is greater than TPS_MIN, or if the actual position for the timing piston detected by the TPS has not reached the point where it is equal to or less than TPS_MIN although the target position is, in fact, equal to or less than TPS_MIN, the operation proceeds to step 60, in which PID calculation is performed for the duty ratio of a TCV drive pulse whereby the actual position for the timing piston (TPSIST) is matched with the target position (TPSSOL) within a specific range. Then, in step 62, the drive pulse with the duty ratio thus calculated is output to the TCV.

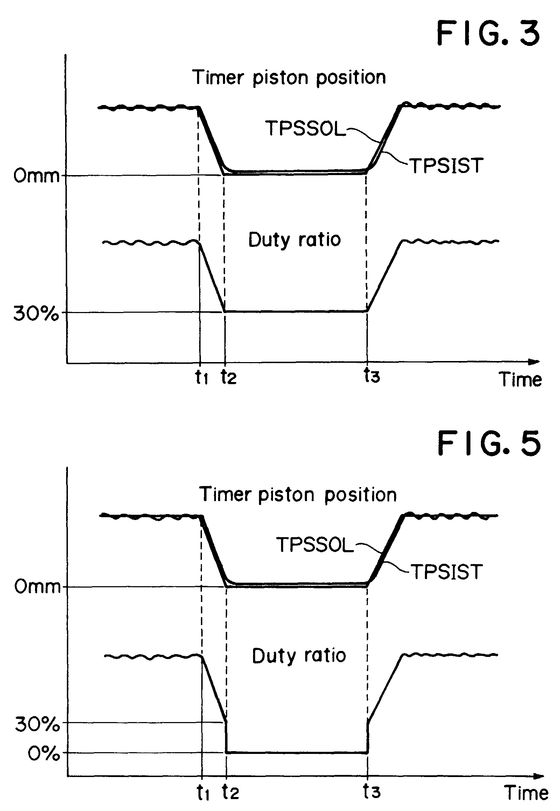

In contrast, if the target position for the timing piston 27 is equal to or less than TPS_MIN and at the same time, the actual position has reached the point where it is equal to or less than TPS_MIN, the operation proceeds to step 64, in which the duty ratio at that time point is stored in RAM as the initial integral value in the PID calculation for the next session. Then the operation bypasses step 60 and proceeds to step 62, in which a drive pulse is output to the TCV at the duty ratio that was determined at the point in time at which the timing piston position has reached the point were it was equal to or less than TPS_MIN, i.e., the duty ratio that is stored in RAM. Consequently, if there is a request to shift the injection timing toward the most delayed angle side at the time point t1, as shown in Figure 3, the target position for the timing piston gradually moves toward the most delayed angle side beginning from the time point t1 and when the target timing piston position is at 0mm at the time point t2 for instance, the actual position for the timing piston is gradually reduced in compliance with its enforced trailing of the target position in steps 60 and 62, to reach 0mm finally. At this time, the actual duty ratio of the drive pulse is approximately 30% but if the PID control is to be continued, there is a likelihood of the duty ratio reaching 0%. However, in this control, PID calculation is interrupted at the time point at which the actual position has reached 0mm and as a result, the duty ratio of the drive pulse becomes fixed at that exact point in time.

Furthermore, when the operation returns to the normal operating state from the idling state described above at time t3, the target position for the timing piston is increased. In such a case, if the duty ratio is at 0% as in the prior art, there will be lost time until the duty ratio reaches 30% because the timing piston does not move during that period. However, according to the present invention, since the duty ratio stored in memory in step 64 is used as the integral initial value in the PID calculation, the timing piston starts to follow immediately after the target position starts to increase, as shown in Figure 3.

Note that while in the embodiment described above an example of control during idling is explained, since the dead zone of the duty ratio is significant during idling, it goes without saying that control can be performed in an identical manner in other operating states.

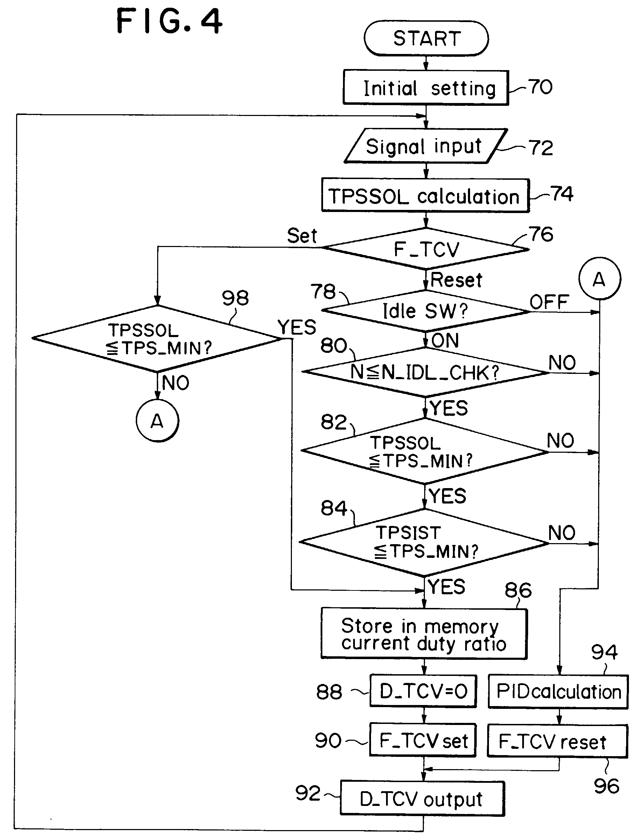

Another embodiment of the present invention is illustrated in Figure 4. In step 70, the control unit 40 performs initial setting of initial values and the like for PID control through which the timing piston converges on the target position. Then in step 72, the signal from the TPS (TPSIST), the engine rotation rate (N), the ON/OFF signal from the idle switch and the signals from the operating state detector, which detects various operating states, are input. In step 74 that follows, the target timing piston position (TPSSOL) that corresponds with the operating state is calculated.

In step 76, a decision is made as to whether or not the flag that sets the process of control processing (F_TCV) has been set. If it has been reset, the operation proceeds to steps 78 - 84 and decisions are made as to whether or not the idle switch is ON (step 78), whether or not the engine rotation rate N is equal to or lower than a specific rotation rate (N_IDL_CHK) (step 80), whether or not the target timing piston position 27 (TPSSOL) is equal to or less than a specific position on the most delayed angle side (TPS_MIN: e.g., 0mm) and whether or not the actual timing piston position (TPSIST) detected by the TPSis equal to or less than TPS_MIN (step 84).

If the idle switch is ON, N ≤ N_IDL_CHK and TPSSOL ≤ TPS_MIN and TPSIST ≤ TPS_MIN, then the operation proceeds to step 86, in which the PID calculation is interrupted and the duty ratio at that time point is stored in RAM as the initial integral value in the PID calculation to be performed later. Then, in step 88 that follows, the duty ratio (D_TCV) of the drive pulse is forcibly set to 0% and in step 90, the flag (F_TCV) is set. Then in step 92, the drive pulse with the duty ratio at 0% is output to the TCV.

When the idle switch is OFF, N > N_IDL_CHK and TPSSOL > TPS_MIN or TPSIST > TPS_MIN, the operation proceeds to step 94, in which PID calculation of the duty ratio of the TCV drive pulse is performed. Then, after the flag (F_TCV) is reset in step 96, the operation proceeds to step 92, in which the drive pulse with the duty ratio that has been calculated in step 94 is output to the TCV.

Also, if it is decided in step 76 that the flag (F_TCV ) has been set, the operation proceeds to step 98 in which a decision is made as to whether or not the target position for the timing piston is equal to or less than TPS_MIN. If the target position is equal to or less than TPS_MIN, the timing piston is maintained at the minimum position (0mm) and if the target position is greater than the TPS_MIN, the operation returns to the normal PID calculation.

Consequently, with the control as described above, when a request to shift the injection timing toward the most delayed angle side occurs at the time point t1, the target position for the timing piston starts to become less gradually, beginning at t1. When the target timing piston position is at 0mm at the time point t2, for example, the actual position also starts to become less gradually, following the target position. Finally, it will be at 0mm and at this point, the actual duty ratio of the drive pulse is approximately 30%. However, since it is forcibly set to 0% in step 88, the timing control valve is set in the full open state, thus eliminating the operating noise.

In addition, if the engine is rapidly accelerated from such an idling state, the target position for the timing piston becomes great. In this case, if the duty ratio remains at 0%, lost time will be generated because the timing piston does not move until the duty ratio reaches 30%. However, according to the present invention, since the duty ratio stored in memory in step 86 is used as the initial integral value for the PID calculation, the duty ratio starts to change beginning from a value in the vicinity of 30% after the target position starts to become greater, and the timing piston immediately starts to follow, as in the embodiment described earlier.

Note that in both embodiments, the timer position sensor 37, which directly detects the timing piston position, is used as the sensor for recognizing the timing piston position. This may be substituted with, for example, a nozzle lift sensor that detects an injection valve opening state on the injection nozzle side or the like, since the timing piston position is directly reflected in the injection timing.

As has been explained, according to the invention disclosed in claim 1, the target position for the timing piston is set within a specific range, when the actual timing piston position has reached this range, the duty ratio of the drive pulse is fixed at the value at that point in time and when the engine rotation rate is suddenly increased, the duty ratio of the drive pulse promptly changes from the fixed duty ratio, thus eliminating the trailing delay of the injection timing.

Also, according to the invention disclosed in claim 2, when the engine rotation is in the idling state, the target position for the timing piston is set within a specific range and the actual timing piston position has reached this range, the duty ratio of the drive pulse at that point in time is stored in memory first, and then the duty ratio is fixed at the value at which the timing control valve is fully open. As a result, the operating noise of the timing control valve can be eliminated during idling and if the engine rotation is increased suddenly from the idling state, the duty ratio of the drive pulse promptly changes from the stored duty ratio, and the trailing delay of the injection timing is eliminated.

## Claims

1. An injection timing apparatus of an electronic fuel injection system comprising;
a timing apparatus (25) that adjusts the fuel injection start time by controlling the position of a timing piston (27) with a timing control valve (31), said timing control valve being controlled with a duty ratio
a sensor (37) that recognizes said position of said timing piston (27),
a means for target position calculation that calculates a target position for the timing piston (27) based upon the operating state,
a means for duty ratio calculation that calculates the duty ratio of a drive pulse in such a manner that the actual position of said timing piston (27) converges toward said target position,
and
a drive means that outputs said drive pulse of said duty ratio that is calculated by said means for duty ratio calculation to said timing control valve (31),
characterized by
a means for decision making that determines whether or not said target position of said timing piston (27) has been set within a specific range and also determines whether or not said position of said timing piston (27) detected by said sensor (37) has reached said specific range, and
by
a means for duty ratio adjustment that, when a decision is made by said means for decision making that a target position of said timing piston (27) has entered said specific range, fixes said duty ratio of said drive pulse at the value at the time point at which said position of said timing piston (27) detected by said sensor has reached said specific range, and that, when a decision is made by said means for decision making that, after shifting from that state, said target position of said timing piston (27) has gone out of said specific range, calculates said duty ratio by using said fixed duty ratio as the initial value for said means for duty ratio calculation.

2. An injection timing apparatus of an electronic fuel injection system comprising;
a timing apparatus (25) that adjusts the fuel injection start time by controlling the position of a timing piston (27) with a timing control valve (31) said timing control valve (31) being controlled with a duty ratio
a sensor (37) that recognizes said position of said timing piston (27),
a means for target position calculation that calculates a target position for said timing piston (27) based upon the operating state,
a means for duty ratio calculation that calculates the duty ratio of the drive pulse in such a manner that the actual position of said timing piston (27) converges toward said target position, and
a drive means that outputs the drive pulse of said duty ratio that is calculated by said means for duty ratio calculation to said timing control valve (31),
characterized by
a means for decision making that determines whether or not the engine is in the idling state, whether or not said target position for said timing piston (27) has been set within a specific range and whether or not said position of said timing piston (27) detected by said sensor has reached said specific range, and by
a means for duty ratio adjustment that, when a decision is made by said means for decision making that said engine is in said idling state, and that said target position of said timing piston (27) has entered said specific range and said position of said timing piston (27) detected by said sensor (37) has reached said specific range, stores in memory said duty ratio of said drive pulse at that point in time and fixes said duty ratio at the value at which said timing control valve (31) is fully open, and that, when a decision is made by said means for decision making that after shifting from that state, said target position of said timing piston (27) has gone out of said specific range, calculates said duty ratio by using said stored duty ratio as the initial value for said means for duty ratio calculation.

3. An injection timing apparatus of an electronic fuel injection system according to claim 1 or claim 2, wherein;
said specific range is equal to or less than a position toward the most delayed angle.

4. An injection timing apparatus of an electronic fuel injection system according to claim 1 or claim 2 wherein;
said means for duty ratio calculation performs PID calculation of said duty ratio of said drive pulse in such a manner that the actual position of said timing piston (27) will converge toward said target position.

5. An injection timing apparatus of an electronic fuel injection system according to claim 1 or claim 2, wherein;
said electronic fuel injection system includes a characteristic such that said position of said timing piston (27) is at the most delayed angle side when said duty ratio of said drive pulse is equal to or less than approximately 30%.

6. An injection timing apparatus of an electronic fuel injection system according to claim 2 wherein;
the decision making as to whether or not the engine is in said idling state includes a decision as to whether or not a idle switch has been turned ON.

## Patentansprüche

1. Vorrichtung für die zeitliche Regulierung der Einspritzung bei einem elektronischen Treibstoffeinspritzsystem, welche umfaßt:
eine Einrichtung (25) für die zeitliche Regulierung, die den Anfangszeitpunkt der Treibstoffeinspritzung durch Steuern der Position eines Kolbens (27) für die zeitliche Regulierung mit einem Steuerventil (31) für die zeitliche Regulierung einstellt, wobei das Steuerventil für die zeitliche Regulierung mit einem Leistungsverhältnis gesteuert wird,
einen Sensor (37), der die Position des Kolbens (27) für die zeitliche Regulierung erkennt,
eine Einrichtung zur Zielpositionsberechnung, die eine Zielposition für den Kolben (27) für die zeitliche Regulierung auf der Basis des Betriebszustands berechnet, eine Einrichtung zur Leistungsverhältnisberechnung, die das Leistungsverhältnis eines Steuerimpulses so berechnet, daß die augenblickliche Position des Kolbens (27) für die zeitliche Regulierung zur Zielposition konvergiert,
und
eine Antriebseinrichtung, die diesen Steuerimpuls mit dem Leistungsverhältnis, das von der Einrichtung zur Leistungsverhältnisberechnung berechnet wird, an das Steuerventil (31) für die zeitliche Regulierung ausgibt,
gekennzeichnet durch
eine Entscheidungseinrichtung, die bestimmt, ob die Zielposition des Kolbens (27) für die zeitliche Regulierung in einem speziellen Bereich festgesetzt wurde oder nicht, und auch bestimmt, ob die vom Sensor (37) erfaßte Position des Kolbens (27) für die zeitliche Regulierung den speziellen Bereich erreicht hat oder nicht, und
durch
eine Einrichtung zur Leistungsverhältniseinstellung, die, wenn von der Entscheidungseinrichtung eine Entscheidung getroffen wurde, daß eine Zielposition des Kolbens (27) für die zeitliche Regulierung in den speziellen Bereich eingetreten ist, das Leistungsverhältnis des Steuerimpulses bei dem Wert zu dem Zeitpunkt festlegt, zu dem die vom Sensor erfaßte Position des Kolbens (27) für die zeitliche Regulierung den speziellen Bereich erreicht hat, und die, wenn von der Entscheidungseinrichtung eine Entscheidung getroffen wurde, daß nach einem Verlagern aus diesem Zustand die Zielposition des Kolbens (27) für die zeitliche Regulierung aus dem speziellen Bereich herausgegangen ist, das Leistungsverhältnis unter Verwendung des festen Leitungsverhältnisses als Anfangswert für die Einrichtung zur Leistungsverhältnisberechnung berechnet.

2. Vorrichtung für die zeitliche Regulierung der Einspritzung bei einem elektronischen Treibstoffeinspritzsystem, welche umfaßt
eine Einrichtung (25) für die zeitliche Regulierung, die den Anfangszeitpunkt der Treibstoffeinspritzung durch Steuern der Position eines Kolbens (27) für die zeitliche Regulierung mit einem Steuerventil (31) für die zeitliche Regulierung einstellt, wobei das Steuerventil (31) für die zeitliche Regulierung mit einem Leistungsverhältnis gesteuert wird,
einen Sensor (37), der die Position des Kolbens (27) für die zeitliche Regulierung erkennt,
eine Einrichtung zur Zielpositionsberechnung, die eine Zielposition für den Kolben (27) für die zeitliche Regulierung auf der Basis des Betriebszustands berechnet, eine Einrichtung zur Leistungsverhältnisberechnung, die das Leistungsverhältnis des Steuerimpulses so berechnet, daß die augenblickliche Position des Kolbens (27) für die zeitliche Regulierung zur Zielposition konvergiert, und
eine Antriebseinrichtung, die den Steuerimpuls mit dem Leistungsverhältnis, das von der Einrichtung zur Leistungsverhältnisberechnung berechnet wird, an das Steuerventil (31) für die zeitliche Regulierung ausgibt,
gekennzeichnet durch
eine Entscheidungseinrichtung, die bestimmt, ob der Motor sich im Leerlaufzustand befindet oder nicht, ob die Zielposition für den Kolben (27) für die zeitliche Regulierung in einem speziellen Bereich festgesetzt wurde oder nicht und ob die vom Sensor erfaßte Position des Kolbens (27) für die zeitliche Regulierung den speziellen Bereich erreicht hat oder nicht, und durch
eine Einrichtung zur Leistungsverhältniseinstellung, die, wenn von der Entscheidungseinrichtung eine Entscheidung getroffen wurde, daß sich der Motor im Leerlaufzustand befindet und daß die Zielposition des Kolbens (27) für die zeitliche Regulierung in den speziellen Bereich eingetreten ist und die vom Sensor (37) erfaßte Position des Kolbens (27) für die zeitliche Regulierung den speziellen Bereich erreicht hat, das Leistungsverhältnis des Steuerimpulses zu diesem Zeitpunkt in einem Speicher speichert und das Leistungsverhältnis bei dem Wert festsetzt, bei dem das Steuerventil (31) für die zeitliche Regulierung vollständig offen ist, und die, wenn von der Entscheidungseinrichtung eine Entscheidung getroffen wurde, daß nach einem Verlagern aus diesem Zustand die Zielposition des Kolbens (27) für die zeitliche Regulierung aus dem speziellen Bereich herausgegangen ist, das Leistungsverhältnis unter Verwendung des gespeicherten Leitungsverhältnisses als Anfangswert für die Einrichtung zur Leistungsverhältnisberechnung berechnet.

3. Vorrichtung für die zeitliche Regulierung der Einspritzung bei einem elektronischen Treibstoffeinspritzsystem nach Anspruch 1 oder Anspruch 2, bei der der spezielle Bereich gleich oder geringer als eine Position zum am meisten verzögerten Winkel hin ist.

4. Vorrichtung für die zeitliche Regulierung der Einspritzung bei einem elektronischen Treibstoffeinspritzsystem nach Anspruch 1 oder Anspruch 2, bei der die Einrichtung zur Leistungsverhältnisberechnung eine PID-Berechnung des Leistungsverhältnisses des Steuerimpulses so ausführt, daß die augenblickliche Position des Kolbens (27) für die zeitliche Regulierung zur Zielposition hin konvergiert.

5. Vorrichtung für die zeitliche Regulierung der Einspritzung bei einem elektronischen Treibstoffeinspritzsystem nach Anspruch 1 oder Anspruch 2, bei der das elektronische Treibstoffeinspritzsystem eine Eigenschaft derart beinhaltet, daß die Position des Kolbens (27) für die zeitliche Regulierung sich auf der Seite des am meisten verzögerten Winkels befindet, wenn das Leistungsverhältnis des Steuerimpulses gleich oder geringer als ungefähr 30% ist.

6. Vorrichtung für die zeitliche Regulierung der Einspritzung bei einem elektronischen Treibstoffeinspritzsystem nach Anspruch 2, bei der die Entscheidungsfindung, ob der Motor sich im Leerlaufzustand befindet oder nicht, eine Entscheidung darüber beinhaltet, ob ein Leerlaufschalter eingeschaltet wurde oder nicht.

## Revendications

1. Dispositif de cadencement d'injection d'un système électronique d'injection électronique de carburant comprenant :
un dispositif de cadencement (25) qui règle l'instant de démarrage de l'injection de carburant en commandant la position d'un piston de cadencement (27) avec une soupape de commande de cadencement (31), ladite soupape de commande de cadencement étant commandée par un taux d'impulsions,
un capteur (37) qui identifie ladite position dudit piston de cadencement (27),
des moyens de calcul d'une position de consigne, qui calculent une position de consigne pour le piston de cadencement (27) sur la base de l'état de fonctionnement,
des moyens de calcul du taux d'impulsions qui calculent le facteur de forme d'une impulsion de commande de telle sorte que la position actuelle dudit piston de cadencement (27) converge vers ladite position de consigne, et
des moyens d'entraînement, qui délivrent ladite impulsion de commande dudit facteur de forme qui est calculée par lesdits moyens de calcul du facteur de forme, à ladite soupape de commande de cadencement (31),
caractérisé par
des moyens pour prendre une décision qui déterminent si ladite position de consigne du piston de cadencement (27) a été réglée ou non dans une gamme spécifique, et qui déterminent également si ladite position dudit piston de cadencement (27) détectée ledit capteur (37) a atteint ou non ladite gamme spécifique, et par
des moyens pour régler le facteur de forme et qui, lorsqu'une décision est prise par lesdits moyens servant à décider si une position de consigne dudit piston de cadencement (27) a atteint ladite gamme spécifique, fixent ledit facteur de forme de ladite impulsion de commande à la valeur présente à l'instant où ladite position dudit piston de cadencement (27) détectée par ledit capteur a atteint ladite gamme spécifique, et que lorsqu'une décision est prise par lesdits moyens décidant si, après un décalage à partir de cet état, ladite position de consigne dudit piston de cadencement (27) est sortie de ladite gamme spécifique, calculent ledit facteur de forme en utilisant ledit facteur de forme fixé en tant que valeur initiale pour lesdits moyens de calcul du facteur de forme.

2. Dispositif de cadencement d'injection d'un système électronique d'injection électronique de carburant comprenant :
un dispositif de cadencement (25) qui règle l'instant de démarrage de l'injection de carburant en commandant la position d'un piston de cadencement (27) avec une soupape de commande de cadencement (31), ladite soupape de commande de cadencement étant commandée par un facteur de forme,
un capteur (37) qui identifie ladite position dudit piston de cadencement (27),
des moyens pour le calcul d'une position de consigne, qui calculent une position de consigne pour le piston de cadencement (27) sur la base de l'état de fonctionnement,
des moyens pour calculer le facteur de forme qui calculent le facteur de forme de l'impulsion de commande de telle sorte que la position actuelle dudit piston de cadencement (27) converge vers ladite position de consigne, et
des moyens d'entraînement, qui délivrent l'impulsion de commande ayant ledit facteur de forme qui est calculé par lesdits moyens de calcul du facteur de forme, à ladite soupape de commande de cadencement (31),
caractérisé par
des moyens pour prendre une décision qui déterminent si le moteur est ou non dans l'état de ralenti, si ladite position de consigne pour ledit piston de cadencement (27) a été réglée ou non dans une gamme spécifique et si ladite position dudit piston de cadencement (27) détectée par ledit capteur a atteint ou non ladite gamme spécifique, et par
des moyens pour régler le facteur de forme et qui, lorsqu'une décision est prise par lesdits moyens servant à décider si ledit moteur est dans ledit état de ralenti et si ladite position de consigne dudit piston de cadencement (27) a atteint ladite gamme spécifique et si ladite position dudit piston de cadencement (27) détectée par ledit capteur (37) a atteint ladite gamme spécifique, mémorisent dans une mémoire ledit facteur de forme de ladite impulsion de commande à cet instant et fixent ledit facteur de forme à la valeur à laquelle ladite soupape de commande de cadencement (31) est complètement ouverte, et qui, lorsqu'une décision est prise par lesdits moyens servant à décider si, après le décalage à partir de cet état, ladite position de consigne dudit piston de cadencement (27) est sortie de ladite gamme spécifique, calculent ledit facteur de forme en utilisant ledit facteur de forme mémorisé en tant que valeur initiale pour lesdits moyens de calcul du facteur de forme.

3. Dispositif de cadencement d'injection d'un système électronique d'injection de carburant selon la revendication 1 ou la revendication 2, dans lequel :
ladite gamme spécifique est égale ou inférieure à une position située vers l'angle de retard maximum.

4. Dispositif de cadencement d'injection pour un système électronique d'injection de carburant selon la revendication 1 ou la revendication 2, dans lequel :
lesdits moyens de calcul du facteur de forme exécutent un calcul PID dudit facteur de forme de ladite impulsion de commande de telle sorte que la position actuelle dudit piston de cadencement (27) converge vers ladite position de consigne.

5. Dispositif de cadencement d'injection pour un système électronique d'injection de carburant selon la revendication 1 ou la revendication 2 dans lequel :
ledit système électronique d'injection de carburant possède une caractéristique telle que ladite position dudit piston de cadencement (27) est située du côté de l'angle du retard maximum lorsque ledit facteur de forme de ladite impulsion de commande est égale ou inférieur à environ 30 %.

6. Dispositif de cadencement d'injection d'un système électronique d'injection de carburant selon la revendication 2, dans lequel :
la décision prise concernant le fait que le moteur est ou non dans ledit état de ralenti, inclut une décision concernant le fait qu'un interrupteur de ralenti a été fermé ou non.
